# EUROPÄISCHE PATENTSCHRIFT

(11) **EP 4 200 059 B1**
(45) Veröffentlichungstag und Bekanntmachung des Hinweises auf die Patenterteilung: **28.10.2026**
(21) Anmeldenummer: 21765587.7
(22) Anmeldetag: 11.08.2021
(51) Int. Cl.: H01M 8/04029, B01D 53/26, H01M 8/04119, H01M 8/04291, B63G 8/08, H01M 8/04007, F28D 9/00

(54) **KOMPAKTER REZIRKULATIONSBEREICH EINER REZIRKULATIONSBRENNSTOFFZELLENVORRICHTUNG**
COMPACT RECIRCULATION REGION OF A RECIRCULATION FUEL CELL DEVICE
ZONE DE RECIRCULATION COMPACTE D'UN DISPOSITIF DE PILES À COMBUSTIBLE À RECIRCULATION

(30) Priorität: 19.08.2020 DE 102020210532
(43) Veröffentlichungstag der Anmeldung: 28.06.2023
(73) Patentinhaber: TKMS GmbH, 24143 Kiel (DE); thyssenkrupp AG, 45143 Essen (DE)
(72) Erfinder: RUSER, Dennis, 24211 Preetz (DE)
(74) Vertreter: thyssenkrupp Intellectual Property GmbH
(86) Internationale Anmeldenummer: PCT/EP2021/072350
(87) Internationale Veröffentlichungsnummer: WO 2022/038010

(56) Entgegenhaltungen:
- EP-A1- 3 694 038
- EP-A2- 1 619 738
- WO-A1-00/39874
- WO-A1-2010/117362
- WO-A1-2015/181652
- WO-A1-2017/157587
- DE-A1- 102009 040 013
- US-A1- 2014 007 606

## Beschreibung

Die Erfindung betrifft einen Entfeuchter zum Einsatz im Rezirkulationsbereich einer Rezirkulationsbrennstoffzelle.

Brennstoffzellen dienen der Erzeugung von Strom durch die gezielte Umsetzung an Anode und Kathode, wobei die Edukte gegeneinander vor einer direkten Umsetzung geschützt sind. Brennstoffzellen werden beispielsweise in nicht-nuklearen Unterseebooten zur außenluftunabhängigen Stromversorgung verwendet.

Um besonders hohe Ausbeuten zu erzielen, können Brennstoffzellen kaskadiert oder rezirkulierend eingesetzt werden.

Ein Beispiel für eine Brennstoffzellenvorrichtung, welche vorzugsweise an Bord eines Unterseebootes eingesetzt werden kann, ist aus der DE 10 2016 219 523 A1 bekannt, welche eine modular aufgebaute Brennstoffzellenvorrichtung beschreibt.

Im Bereich der Rezirkulationsbrennstoffzelle ist vor allem auch wichtig, wie mit dem im Prozess vorhandenem und entstehendem Wasser umgegangen wird. Insbesondere bei Polymerelektrolytmembran-Brennstoffzellen (PEM-Brennstoffzellen) ist eine hohe Feuchte der eintretenden Gase vorteilhaft, um die Lebensdauer der PEM zu gewährleisten. Durch die Reaktion von Wasserstoff und Sauerstoff entsteht während des Betriebes Wasser, welches aus dem Prozess entfernt werden muss.

Aus der DE 10 2015 209 802 A1 ist eine Rezirkulationsbrennstoffzellenvorrichtung mit einer Rezirkulation des Prozesswassers bekannt.

Aus der DE 10 2015 209 804 A1 ist eine Rezirkulationsbrennstoffzellenvorrichtung mit einer einstellbaren Abgabe von Gasen an die Umgebung bekannt.

Aus der WO 2010 / 117 362 A1 ist ein Wärmetauschkondensator einer Säurebrennstoffzelle bekannt.

Die Entfeuchtung ist auch notwendig, da zur Kompensation des Druckverlustes im Rezirkulationsbereich ein Verdichter angeordnet sein muss, um den Druckunterschied zu kompensieren. Hierbei ist gerade Wasserstoff aufgrund des geringen Molekulargewichts schwerer zu verdichten. Gleichzeitig würde eine Tröpfchenbildung (mit einer gegenüber dem Wasserstoffgas extrem hohen Dichte) in dem Verdichter zu hohen technischen Herausforderungen führen. Der Gasstrom muss also dem entsprechend soweit entfeuchtet werden, dass es während der Verdichtung nicht zur Kondensation kommt.

Gleichzeitig besteht gerade in einem Unterseeboot immer die Herausforderung, mit dem geringen zur Verfügung stehenden Platz aufgrund der hohen Integrationsdichte auszukommen.

Aufgabe der Erfindung ist es, einen möglichst kompakten Rezirkulationsbereich für eine Brennstoffzellenvorrichtung bereit zu stellen, der eine Kondensation im Verdichter zuverlässig verhindert.

Gelöst wird diese Aufgabe durch einen Entfeuchter mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Entfeuchter weist ein Gehäuse auf. Das Gehäuse umschließt die Komponenten des Entfeuchters und im Inneren des Gehäuses des Entfeuchters liegt ein verbundener Innenraum vor. Der Entfeuchter weist innerhalb des Gehäuses wenigstens einen ersten Wärmetauscher und wenigstens einen zweiten Wärmetauscher auf. Der wenigstens eine erste Wärmetauscher ist unterhalb des wenigstens einen zweiten Wärmetauschers angeordnet. Ein Gasstrom durchströmt somit beide Wärmetauscher nacheinander. Der zweite Wärmetauscher ist somit fluidtechnisch in Reihe hinter den ersten Wärmetauscher geschaltet. Weiter verlässt das Gas beim Durchströmen das Gehäuse zwischen dem ersten Wärmetauscher und dem zweiten Wärmetauscher nicht. Der wenigstens eine erste Wärmetauscher wird von dem Gasstrom von unten nach oben durchströmt und der wenigstens eine zweite Wärmetauscher wird von dem Gasstrom von unten nach oben durchströmt. Der wenigstens eine erste Wärmetauscher ist zum Abkühlen des Gasstroms ausgebildet und der wenigstens eine zweite Wärmetauscher ist zum Erwärmen des Gasstroms ausgebildet. Unter dem wenigstens einen ersten Wärmetauscher ist in dem Gehäuse ein Wasserspeicher angeordnet.

Ein Wärmetauscher ist zum Erwärmen oder Abkühlen eines Gasstromes dadurch ausgebildet, dass der Wärmetauscher mit einer Quelle für ein entsprechend temperiertes Wärmeträgermedium verbunden wird. Beispielsweise ist der erste Wärmetauscher am oberen Ende mit einer Quelle für ein kaltes Wärmeträgermedium verbunden, welches am unteren Ende erwärmt austritt. Der zweite Wärmetauscher ist am oberen Ende mit einer Quelle für ein warmes Wärmeträgermedium verbunden, welches am unteren Ende abgekühlt austritt. Idealisiert kann das im zweiten Wärmetauscher abgekühlte Wärmeträgermedium, welches am unteren Ende des zweiten Wärmetauschers austritt in dem ersten Wärmetauscher am oberen Ende zugeführt werden. Nachdem das Wärmeträgermedium im ersten Wärmetauscher erwärmt wurde, kann das am unteren Ende des ersten Wärmetauschers austretende erwärmte Wärmeträgermedium dem zweiten Wärmetauscher am oberen Ende zugeführt werden. Da jedoch beispielsweise Wärmeverluste und die Kondensationswärme dazu führen, dass eine rein passive Führung regelmäßig nicht funktioniert, kann beispielsweise das Wärmeträgermedium zwischen dem unteren Ende des zweiten Wärmetauschers durch eine Kühlvorrichtung zum oberen Ende des ersten Wärmetauschers geführt werden. Ebenso kann das Wärmeträgermedium zwischen dem unteren Ende des ersten Wärmetauschers durch eine Heizvorrichtung zum oberen Ende des zweiten Wärmetauschers geführt werden.

Durch diese Anordnung wird das im ersten Wärmetauscher auskondensierendes Wasser bereits im ersten Wärmetauscher abgetrennt und durch die Gravitation im Gegenstrom zum Gasstrom nach unten in den Wasserspeicher geführt. Damit kann im Gegensatz zur bisherigen getrennten Ausführung auf einen Wasserabscheider, welcher zwischen dem ersten Wärmetauscher und dem zweiten Wärmetauscher angeordnet ist, verzichtet werden. Die Wärmetauscher sind vorteilhaft so zueinander angeordnet, dass die aus dem ersten Wärmetauscher austretende Luft mit kurzer Wegstrecke direkt in den zweiten Wärmetauscher eintreten kann. Eine Umlenkung des Luftstroms findet dann bevorzugt nicht statt. Außerdem wird hierdurch eine sehr kompakte Bauweise ermöglicht.

Im unteren Bereich des Entfeuchters, vorzugsweise unter dem wenigsten einen ersten Entfeuchter und oberhalb des Wasserspeichers ist ein Einlass für das zu entfeuchtende Gas, beispielsweise und bevorzugt für die aus einer Seite einer Rezirkulationsbrennstoffzelle austretende Gasgemisch.

Im oberen Bereich ist ein Auslass für das entfeuchtete Gas, beispielsweise zur Verbindung mit einem Verdichter.

In einer weiteren Ausführungsform der Erfindung wird der wenigstens eine erste Wärmetauscher von Kühlflüssigkeit im Gegenstrom durchflossen.

In einer weiteren Ausführungsform der Erfindung ist der wenigstens eine erste Wärmetauscher als Plattenwärmetauscher ausgeführt.

In einer weiteren Ausführungsform der Erfindung sind zwei erste Wärmetauscher direkt übereinander angeordnet. Hierdurch wird eine Modularisierung erreicht,
In einer weiteren Ausführungsform der Erfindung sind zwei zweite Wärmetauscher direkt übereinander angeordnet. Hierdurch wird eine Modularisierung erreicht,
In einer weiteren Ausführungsform der Erfindung sind der erste Wärmetauscher und der zweite Wärmetauscher baugleich. Dieses vereinfacht die Herstellung durch Gleichförmigkeit der Komponenten.

In einer weiteren Ausführungsform der Erfindung weist das Gehäuse des Entfeuchters eine rechteckige Grundform auf. Besonders bevorzugt ist die Höhe des Entfeuchters größer als die Breite und Tiefe des Entfeuchters. Hierdurch wird die Entfeuchtung optimiert.

In einer weiteren Ausführungsform der Erfindung weist das Gehäuse im Bereich des Wasserspeichers eine Verbreiterung auf. Hierdurch kann das Gehäuse eine L-Form aufweisen. Durch die Verbreiterung im unteren Bereich werden zwei Effekte erzielt. Zum einen wird das Volumen für den Wasserspeicher vergrößert. Dieses kann vorteilhaft sein, wenn situationsbedingt kein Wasser abgeführt werden kann, die Brennstoffzelle aber kontinuierlich weiter Wasser produziert. Durch ein größeres Volumen werden somit die zeitlichen Reserven zum weiteren Betrieb einer Brennstoffzelle unter erschwerten Bedingungen vergrößert. Zum anderen kann die verbreiterte Form bei der Verwendung auf Wasserfahrzeugen vorteilhaft sein, wo beispielsweise durch Seegang oder andere Schiffsbewegungen keine konstante Lage des Wasserspeichers und damit der Wasseroberfläche im Wasserspeicher gegeben ist.

**In** einer weiteren Ausführungsform der Erfindung weist der Wasserspeicher einen Wasserablassanschluss auf, um das Wasser beispielsweise an Befeuchter abgegeben zu können oder um dieses aus dem Prozess auszuschleusen.

**In** einer weiteren Ausführungsform der Erfindung weist der Entfeuchter im Wasserspeicher wenigstens zwei Füllstandsensoren auf. Gerade bei der Verwendung auf einem Wasserfahrzeug ist es sinnvoll wenigstens zwei, bevorzugt drei oder vier Wasserstandsensoren zu vorzusehen, um auch bei Schräglage, beispielsweise bei Krängung, örtlich den Wasserstand zu kennen.

**In** einer weiteren Ausführungsform der Erfindung weist der Entfeuchter wenigstens zwei Einlässe für das zu entfeuchtende Gas auf, wobei die Einlässe unterhalb des ersten Wärmetauschers angeordnet sind, bevorzugt sind sie im Wasserspeicher, am oberen Ende des Wasserspeichers oder zwischen dem Wasserspeicher und dem ersten Wärmetauscher angeordnet. Die Einlässe für das zu entfeuchtende Gas sind jeweils mit einem Auslass an der Brennstoffzelle verbunden, wobei sie so angeordnet sind, dass bei einer Schräglage des Bootes zumindest ein Auslass an der Brennstoffzelle den Gasfluss in den Entfeuchter ermöglicht. Dabei kann vorgesehen sein, dass der Einlass in den Entfeuchter an der gleichen Seite des Gehäuses des Entfeuchters angeordnet ist wie der Auslass am Gehäuse der Brennstoffzelle. Bei dieser Anordnung ist immer die jeweils höhere Verbindung ungehindert durch Wasser frei durchströmbar. Alternativ kann vorgesehen sein, dass im Innern des Wasserspeichers zwei Einlassrohre so angeordnet sind, dass die Öffnungen bei gerader Lage oberhalb des Wasserstandes liegen, wobei die Rohre so mit den Auslässen der Brennstoffzelle verbunden sind, dass bei einer Schräglage der tieferliegende Auslass der Brennstoffzelle mit der dann höher liegenden Öffnung eines der Auslassrohre verbunden ist. Dieses hat den Vorteil, dass bei einer Schräglage mit dem Ausgangsgas gleichzeitig auch Wasser aus der Brennstoffzelle ausgetragen werden kann und keine zusätzliche Entwässerung vorgenommen werden muss.

In einer weiteren Ausführungsform der Erfindung ist der Wärmetauscher als Plattenwärmetauscher ausgeführt, wobei der Plattenwärmetauscher Trennwände aufweist. Die Trennwände trennen Bereiche für ein gasförmiges wärmeabgebendes Medium und eine wärmeaufnehmende Kühlflüssigkeit. Der Wärmetauscher weist erste Bereiche zwischen den Trennwänden für ein gasförmiges wärmeabgebendes Medium und zweite Bereiche zwischen den Trennwänden für eine wärmeaufnehmende Kühlflüssigkeit auf, wobei die ersten Bereiche und die zweiten Bereiche durch eine Mehrzahl von Trennwände getrennt sind. Eine Mehrzahl an Trennwänden sind bevorzugt 5 bis 200 Trennwände, besonders bevorzugt 20 bis 50 Trennwände. Jeweils zwischen zwei benachbarten Trennwänden sind erste Bereiche und zweite Bereiche alternierend angeordnet. Somit grenzt jeweils ein wärmeabgebender Bereich durch eine Trennwand getrennt an einen wärmeaufnehmenden Bereich. Mit Ausnahme der beiden äußersten Bereiche grenzt jeder Bereich beidseitig an die entsprechende Bereiche, sodass ein optimaler Wärmeübertrag erfolgen kann. Der Wärmetauscher weist einen Kühlflüssigkeitseinlass und einen Kühlflüssigkeitsauslass auf. Zwischen dem Kühlflüssigkeitseinlass und den zweiten Bereichen ist ein Kühlflüssigkeitsverteilungsbereich angeordnet. Das gasförmige Medium durchströmt den Wärmetauscher von unten nach oben, die Kühlflüssigkeit den Wärmetauscher durchströmt von oben nach unten. Es handelt sich somit um einen Gegenstromwärmetauscher.

Beispielsweise und bevorzugt ist der Kühlflüssigkeitseinlass seitlich am oberen Rand des Wärmetauschers angeordnet. Weiter bevorzugt ist der Kühlflüssigkeitseinlass ist mittig am oberen Rand des Wärmetauschers angeordnet. Der Kühlflüssigkeitsverteilungsbereich teilt den Kühlflüssigkeitsstrom in einen ersten Teilstrom und einen zweiten Teilstrom, wobei der erste Teilstrom und der zweite Teilstrom seitlich in entgegengesetzte Richtungen geleitet werden. In Flussrichtung der Kühlflüssigkeit wird somit ein Teilstrom nach rechts und der andere nach links abgelenkt.

Durch diese Teilung in zwei Teilströme wird bereits eine erste Vergleichmäßigung erreicht, da jeder Teilstrom nur auf die Hälfte der zweiten Bereiche gleichmäßig verteilt werden muss. Der Kühlflüssigkeitsverteilungsbereich weist wenigstens einen ersten Verbindungsbereich und einen zweiten Verbindungsbereich auf, wobei der erste Verbindungsbereich die Kühlflüssigkeit aus dem ersten Teilstrom und der zweite Verbindungsbereich die Kühlflüssigkeit aus dem zweiten Teilstrom in die zweiten Bereiche leiten. Die Öffnungen zwischen den Verbindungsbereichen und den zweiten Bereichen sind unterschiedlich groß. Hierbei ist die Größe so eingestellt, dass in alle zweiten Bereiche jeweils die gleiche Menge an Kühlflüssigkeit in der gleichen Zeit strömt.

Eine der wichtigsten Herausforderungen zur Erreichung einer hohen Effizienz ist es, dass eine gleichmäßige Verteilung der Kühlflüssigkeit und somit an allen Stellen ein möglichst optimaler Wärmeübergang möglich ist. Daher ist gerade die möglichst gleichförmige Verteilung der Kühlflüssigkeit auf die zweiten Bereiche einer der Schlüssel für den effizienten und platzsparenden Wärmeübergang.

**In** einer weiteren Ausführungsform der Erfindung ist der zweite Flüssigkeitsauslass des zweiten Wärmetauschers mit dem ersten Flüssigkeitseinlass des ersten Wärmetauschers verbunden. Der der zweite Flüssigkeitsauslass des zweiten Wärmetauschers ist mit dem ersten Flüssigkeitseinlass des ersten Wärmetauschers beispielsweise und insbesondere direkt verbunden. Alternativ ist der der zweite Flüssigkeitsauslass des zweiten Wärmetauschers beispielsweise und insbesondere über eine Kühlvorrichtung mit dem ersten Flüssigkeitseinlass des ersten Wärmetauschers verbunden.

In einer weiteren Ausführungsform der Erfindung ist der erste Flüssigkeitsauslass des ersten Wärmetauschers mit dem zweiten Flüssigkeitseinlass des zweiten Wärmetauschers verbunden. Der der erste Flüssigkeitsauslass des ersten Wärmetauschers ist mit dem zweiten Flüssigkeitseinlass des zweiten Wärmetauschers beispielsweise und insbesondere direkt verbunden. Alternativ ist der der erste Flüssigkeitsauslass des ersten Wärmetauschers beispielsweise und insbesondere über eine Heizvorrichtung mit dem zweiten Flüssigkeitseinlass des zweiten Wärmetauschers verbunden.

In einer weiteren Ausführungsform der Erfindung ist zwischen dem ersten Teilstrom und dem ersten Verbindungsbereich wenigstens ein erster Strömungskörper angeordnet und zwischen dem zweiten Teilstrom und dem zweiten Verbindungsbereich ist wenigstens ein zweiter Strömungskörper angeordnet. Ein Strömungskörper dient dazu den Flüssigkeitsstrom zu teilen und zu lenken. Beispielsweise und bevorzugt sind zwischen dem ersten Teilstrom und dem ersten Verbindungsbereich wenigstens zwei erste Strömungskörper angeordnet und zwischen dem zweiten Teilstrom und dem zweiten Verbindungsbereich sind wenigstens zwei zweite Strömungskörper angeordnet. Hierdurch ist eine weitere Unterteilung und bessere Verteilung des Kühlflüssigkeitsstromes möglich. Besonders bevorzugt sind zwischen dem ersten Teilstrom und dem ersten Verbindungsbereich drei erste Strömungskörper angeordnet und zwischen dem zweiten Teilstrom und dem zweiten Verbindungsbereich sind drei zweite Strömungskörper angeordnet. Hierdurch ist eine weitere Unterteilung und bessere Verteilung des Kühlflüssigkeitsstromes möglich.

In einer weiteren Ausführungsform der Erfindung verlaufen der erste Teilstrom und der erste Verbindungsbereich parallel nebeneinander und der zweite Teilstrom und der zweite Verbindungsbereich verlaufen parallel nebeneinander. Hierdurch ist eine besonders kompakte Bauweise möglich.

In einer weiteren Ausführungsform der Erfindung sind der erste Verbindungsbereich und der zweite Verbindungsbereich fluidtechnisch direkt miteinander verbunden. Beide Verbindungsbereiche können dabei auch vollständig ineinander übergehen.

In einer weiteren Ausführungsform der Erfindung weisen die zweiten Bereiche wenigstens drei im Wesentlichen horizontal verlaufende Umlenkwände auf, wobei sich die Umlenkwände über 50 % bis 85 % der Breite der zweiten Bereiche erstrecken. Die oberste Umlenkwand befindet sich auf der Seite des Kühlflüssigkeitsverteilungsbereichs und die Umlenkwände beginnen alternierend von den gegenüberliegenden Seiten an den Außenwänden der zweiten Bereiche, sodass sich für die Kühlflüssigkeit eine schleifenförmige Durchströmung des zweiten Bereichs ergibt. Zwischen jeder Umlenkwand und den Außenwänden des zweiten Bereichs sind Eckelemente angeordnet, wobei der Winkel zwischen dem Eckelement und der Umlenkwand maximal 45 ° beträgt und der Winkel zwischen dem Eckelement und der Außenwand maximal 45 ° beträgt.

Besitzt das Eckelement eine dreieckige Form, so ist das Eckelement bevorzugt ein gleichschenkliges Dreieck, welches zwei Winkel von genau 45 ° und einen Winkel von 90 ° aufweist.

Horizontal ist waagerecht, sofern der Wärmetauscher auf einer ebenen Fläche angeordnet ist. Unter im Wesentlichen horizontal ist eine um maximal ± 15 °, bevorzugt um maximal ± 10 °, bevorzugt um maximal ± 5 °, von der Waagerechten abweichende Anordnung zu verstehen.

Die Verwendung der Eckelemente hat zwei technische Vorteile. Zum einen wird durch die Vermeidung von größeren Winkeln vermieden, dass Bereiche entstehen, aus welchen Pulver, welches bei Herstellung mittels additiver Fertigungsverfahren im Inneren angeordnet ist, nicht entfernbar ist. Zum anderen werden strömungstechnische Totbereiche so vermieden.

In einer weiteren Ausführungsform der Erfindung weist der Kühlflüssigkeitseinlass einen tropfenförmigen Querschnitt auf. Auch dieses dient dazu, dass im Falle der Fertigung mittels additiver Fertigungstechniken eine erhöhte Stabilität in diesem Bereich erreicht wird.

In einer weiteren Ausführungsform der Erfindung weisen die ersten Bereiche Prellbleche auf, wobei die Prellbleche senkrecht zu den Trennwänden angeordnet sind. Die Prellbleche sind zueinander beabstandet. Weiter sind die Prellbleche übereinander im zickzack angeordnet und die zickzack-Reihen der Prellbleche sind nebeneinander angeordnet. Die Seitenwände der Prellbleche weisen einen Winkel zur Trennwand von maximal 45 ° auf.

Die Prellbleche führen zum einen dazu, dass der Strom des gasförmigen wärmeabgebenden Mediums leicht verlängert und damit die Kontaktfläche verbessert wird. Zum anderen ermöglichen die Prellbleche, dass sich bei der Abkühlung des gasförmigen Mediums abscheidendes Wasser an den Prellblechen entlang nach unten abgeführt werden kann.

Die Prellbleche weisen bevorzugt einen Winkel zur Senkrechten von 10 ° bis 30 ° auf, wobei jeweils übereinander angeordnete Prellbleche in entgegengesetzte Richtung von der Senkrechten abweichen.

Der Winkel von maximal 45 ° führt zum einen zu einer optimalen Fertigungsmöglichkeit im additiven Herstellprozess, insbesondere einer optimalen Entfernung von Pulverrückständen. Zum anderen erweist sich die Geometrie als positiv zur Abführung von kondensiertem Wasser.

In einer weiteren Ausführungsform der Erfindung sind die Prellbleche sich auf den gegenüberliegenden Trennwänden jeweils paarweise gegenüberliegend angeordnet, wobei die sich gegenüberliegenden Prellbleche in der Mitte zwischen den Trennwänden miteinander verbunden sind. Durch diese Verbindungen wird neben einer optimierten Gasführung und einer optimierten Abführung von Kondensat auch die mechanische Stabilität des Wärmetauschers gesteigert.

In einer weiteren Ausführungsform der Erfindung ist das gasförmige wärmeabgebende Medium feuchtigkeitsgesättigt, sodass es während der Abkühlung im ersten Wärmetauscher zur Kondensation von Wasser kommt. Somit fließt das Kondensat in Gegenrichtung der Strömungsrichtung des gasförmigen Mediums. Durch diese Anordnung kann auf einen nachgeschalteten Wasserabscheider verzichtet werden, was den insgesamt benötigten Platzbedarf reduziert.

In einem weiteren Aspekt betrifft die Erfindung eine Brennstoffzellenvorrichtung mit wenigstens einem erfindungsgemäßen Entfeuchter. Besonders bevorzugt weist die Brennstoffzellenvorrichtung mit wenigstens zwei erfindungsgemäße Entfeuchter auf, einen für die Anodenseite und einen für die Kathodenseite.

In einer weiteren Ausführungsform der Erfindung ist das Gehäuse des Entfeuchters als tragendes Element des Gehäuses der Brennstoffzellenvorrichtung ausgeführt.

Üblicherweise werden die Komponenten einer Brennstoffzellenvorrichtung in einem Gehäuse mit einem festen tragenden Rahmen (Rack) eingebaut. Aufgrund der Größe und der Form, welche sich vorzugsweise von unten nach oben erstreckt, kann das Gehäuse des Entfeuchters als tragendes Element und somit als Bestandteil des tragenden Rahmens ausgeführt sein. Dieses wird dadurch begünstigt, dass beispielsweise die Brennstoffzellen (oft als Stapel (Stacks) ausgeführt) vergleichsweise häufiger ausgetauscht werden müssen. Ebenso ist beispielsweise ein Verdichter beispielsweise zu Wartungszwecken oder zum Austausch optimal leicht und schnell entfernbar. Der Entfeuchter weist keine beweglichen Teile auf und unterliegt daher deutlich weniger dem Verschleiß im Vergleich zu beispielsweise einem Verdichter. Ebenfalls weist ein Entfeuchter beispielsweise keine empfindliche Membran auf, wie beispielsweise eine PEM-Brennstoffzelle, und muss daher ebenfalls vergleichsweise selten ausgetauscht werden. Daher ist eine Integration als tragendes Element in einen Rahmen, was einen Ausbau sehr erschwert, für einen Entfeuchter realisierbar. Das Gehäuse des Entfeuchters kann so angeordnet sein, dass der tragende Rahmen des Gehäuses der Brennstoffzellenvorrichtung an dem Gehäuse des Entfeuchters befestigt werden kann und sich das Gehäuse der Brennstoffzellenvorrichtung dort abstützt. Besonders bevorzugt ist dabei eine Außenseite des Gehäuses des Entfeuchters bündig mit der Außenseite des Gehäuses der Brennstoffzellenvorrichtung. In diesem Fall bildet die Außenseite des Gehäuses des Entfeuchters die Außenseite des Gehäuses der Brennstoffzellenvorrichtung.

In einem weiteren Aspekt betrifft die Erfindung ein Unterseeboot mit wenigstens einer erfindungsgemäßen Brennstoffzellenvorrichtung.

Nachfolgend ist der erfindungsgemäße Entfeuchter anhand von in den Zeichnungen dargestellten Ausführungsbeispielen näher erläutert.
Fig. 1 Entfeuchter
Fig. 2 Entfeuchter mit modularen Wärmetauschern
Fig. 3 Entfeuchter in L-Form

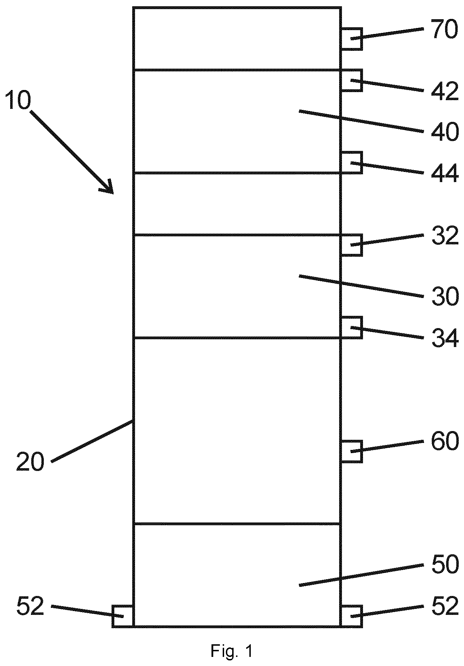

In Fig. 1 ist ein erster Entfeuchter 10 gezeigt. Der Entfeuchter weist ein Gehäuse 20 auf, wobei das Gehäuse eine rechteckige Form aufweist (Turm). Unten im Gehäuse 20 ist ein Wasserspeicher 50 angeordnet. In dem Wasserspeicher 50 sammelt sich abgeschiedenes Wasser und kann über einen oder beide Wasserauslässe 52 entfernt werden. Der Entfeuchter weist vorzugsweise zwei Wasserauslässe 52 auf gegenüberliegenden Seiten auf, damit auch bei Schräglage eine Wasserentnahme möglich ist. Oberhalb des Wasserspeichers 50 wird über einen Gaseinlass 60 Gas eingeleitet, beispielsweise und insbesondere das Gas aus einer Brennstoffzelle, welche insbesondere Bestandteil einer Rezirkulationsbrennstoffzellenvorrichtung ist, austretende Gas. Das Gas strömt aufwärts in den ersten Wärmetauscher 30, in dem das Gas abgekühlt wird und Feuchtigkeit auskondensiert. Das Wasser fließt im Gegenstrom zum Gas nach unten und tropft in den Wasserspeicher 50. Das abgekühlte, aus dem ersten Wärmetauscher 30 austretende Gas strömt weiter nach oben und wird im zweiten Wärmetauscher wieder erwärmt. Anschließend verlässt das Gas den Entfeuchter 10 durch den Gasauslass 70 beispielsweise zu einem Verdichter, in dem der Druck erhöht wird, um dieses auf der Eingangsseite der Brennstoffzelle wieder zuzuführen.

Im ersten Wärmetauscher 30 tritt eine Kühlflüssigkeit am ersten Flüssigkeitseinlass 32 ein und am ersten Flüssigkeitsauslass 34 wieder aus. Im zweiten Wärmetauscher 40 tritt eine Flüssigkeit am zweiten Flüssigkeitseinlass 42 ein und am zweiten Flüssigkeitsauslass 44 wieder aus, wobei die Flüssigkeit im Regelfall die gleiche Flüssigkeit wie die Kühlflüssigkeit, nur mit einer höheren Temperatur ist. Theoretisch kann die Flüssigkeit im Kreis geführt werden, wobei die Flüssigkeit aus dem zweiten Flüssigkeitsauslass 44 des zweiten Wärmetauschers 40 in den ersten Flüssigkeitseinlass 32 des ersten Wärmetauschers 30 und aus dem ersten Flüssigkeitsauslass 34 des ersten Wärmetauschers 30 in den zweiten Flüssigkeitseinlass 42 des zweiten Wärmetauschers 40 geleitet wird, wobei insbesondere für Anfahrprozesse zusätzliche Wärmequellen und -senken benötigt werden.

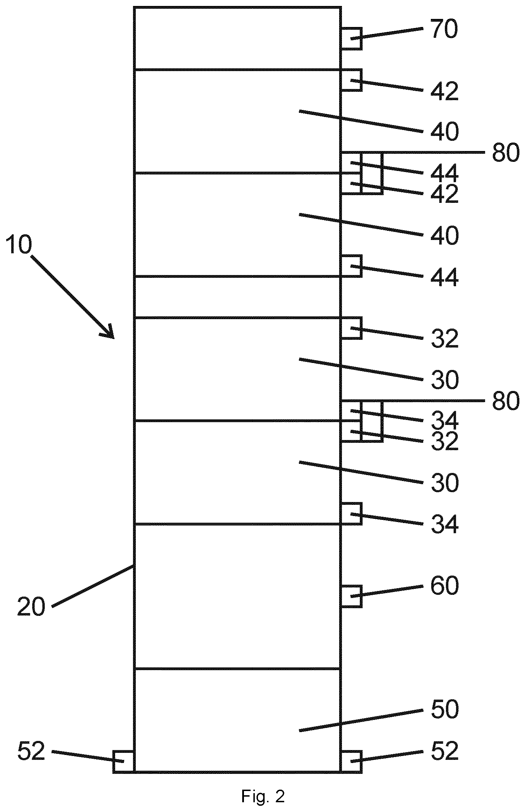

Der in Fig. 2 gezeigte zweite Entfeuchter 10 unterscheidet sich von dem in Fig. 1 gezeigten ersten Entfeuchter 10 in dem zwei erste Wärmetauscher 30 modular übereinander zusammen gesetzt werden und ebenso zwei zweite Wärmetauscher 40. Dieses ermöglicht eine einfachere modulare Fertigung, insbesondere bei Wärmetauschern 30, 40, welche additiv hergestellt sind. Besonders bevorzugt sind die ersten Wärmetauscher 30 und die zweiten Wärmetauscher 40 baugleich, damit hier nur ein Element benötigt wird, welches zweimal identisch verbaut wird. Hierdurch wird sowohl die Herstellung als auch die Bereitstellung von Ersatzteilen sowie die Wartung vereinfacht.

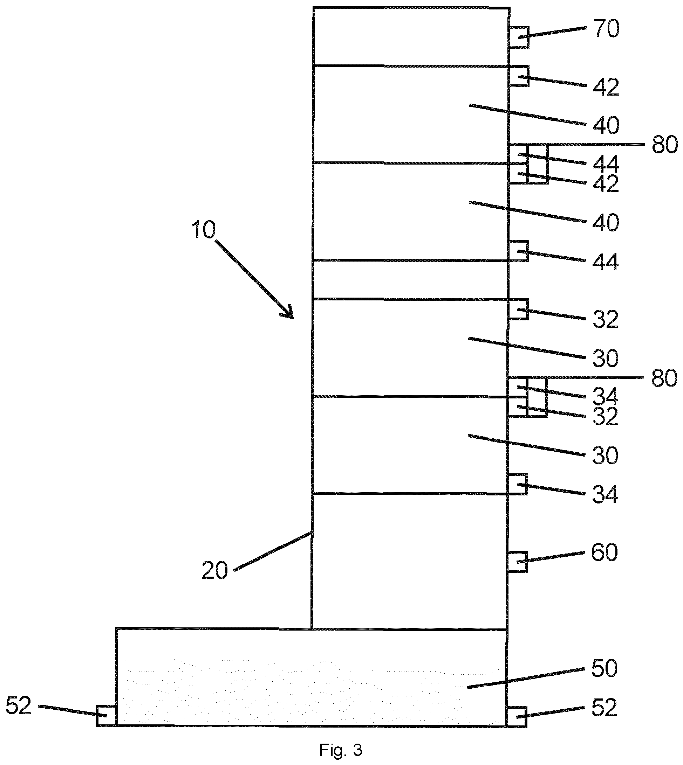

Der in Fig. 3 gezeigte dritte Entfeuchter 10 unterscheidet sich von dem in Fig. 2 gezeigten zweiten Entfeuchter 10 durch eine L-Form, was zu einem flacheren breiteren Wasserspeicher 50 führt, was insbesondere bei Seegang vorteilhaft ist.

### Bezugszeichen

- 10: Entfeuchter
- 20: Gehäuse
- 30: erster Wärmetauscher
- 32: erster Flüssigkeitseinlass
- 34: erster Flüssigkeitsauslass
- 40: zweiter Wärmetauscher
- 42: zweiter Flüssigkeitseinlass
- 44: zweiter Flüssigkeitsauslass
- 50: Wasserspeicher
- 52: Wasserauslass
- 60: Gaseinlass
- 70: Gasauslass
- 80: Verbindungsstück

## Patentansprüche

1. Entfeuchter (10), wobei der Entfeuchter (10) ein Gehäuse (20) aufweist, wobei der Entfeuchter (10) innerhalb des Gehäuses (20) wenigstens einen ersten Wärmetauscher (30) und wenigstens einen zweiten Wärmetauscher aufweist, wobei der wenigstens eine erste Wärmetauscher (30) unterhalb des wenigstens einen zweiten Wärmetauschers so angeordnet ist, dass ein Gasstrom beide Wärmetauscher nacheinander durchströmen kann, wobei der wenigstens eine erste Wärmetauscher (30) von dem Gasstrom von unten nach oben durchströmt wird, wobei der wenigstens eine zweite Wärmetauscher von dem Gasstrom von unten nach oben durchströmt wird, wobei der wenigstens eine erste Wärmetauscher (30) zum Abkühlen des Gasstroms ausgebildet ist, wobei der wenigstens eine zweite Wärmetauscher zum Erwärmen des Gasstroms ausgebildet ist, wobei unter dem wenigstens einen ersten Wärmetauscher (30) in dem Gehäuse (20) ein Wasserspeicher (50) angeordnet ist.

2. Entfeuchter (10) nach Anspruch 1, **dadurch gekennzeichnet, dass** der wenigstens eine erste Wärmetauscher (30) von Kühlflüssigkeit im Gegenstrom durchflossen wird.

3. Entfeuchter (10) nach einem der vorstehenden Ansprüche, **dadurch gekennzeichnet, dass** der wenigstens eine erste Wärmetauscher (30) als Plattenwärmetauscher ausgeführt ist.

4. Entfeuchter (10) nach einem der vorstehenden Ansprüche, **dadurch gekennzeichnet, dass** das Gehäuse (20) des Entfeuchters (10) eine rechteckige Grundform aufweist.

5. Entfeuchter (10) nach Anspruch 4, **dadurch gekennzeichnet, dass** das Gehäuse (20) im Bereich des Wasserspeichers (50) eine Verbreiterung aufweist.

6. Entfeuchter (10) nach einem der vorstehenden Ansprüche, **dadurch gekennzeichnet, dass** der Entfeuchter (10) im Wasserspeicher (50) wenigstens zwei Füllstandsensoren aufweist.

7. Brennstoffzellenvorrichtung mit wenigstens einem Entfeuchter (10) nach einem der vorstehenden Ansprüche.

8. Brennstoffzellenvorrichtung nach Anspruch 7, **dadurch gekennzeichnet, dass** das Gehäuse (20) des Entfeuchters (10) als tragendes Element der Brennstoffzellenvorrichtung ausgeführt ist.

9. Unterseeboot mit wenigstens einer Brennstoffzellenvorrichtung nach einem der Ansprüche 7 bis 8.

## Claims

1. A dehumidifier (10), wherein the dehumidifier (10) has a housing (20), wherein the dehumidifier (10) has at least a first heat exchanger (30) and at least a second heat exchanger within the housing (20), wherein the at least one first heat exchanger (30) is disposed beneath the at least one second heat exchanger such that a gas stream can flow through the two heat exchangers successively, wherein the gas stream flows through the at least one first heat exchanger (30) from the bottom upward, wherein the gas stream flows through the at least one second heat exchanger from the bottom upward, wherein the at least one first heat exchanger (30) is designed to cool the gas stream, wherein the at least one second heat exchanger is designed to heat the gas stream, wherein a water storage means (50) is disposed beneath the at least one first heat exchanger (30) in the housing (20).

2. The dehumidifier (10) as claimed in claim 1, **characterized in that** cooling fluid flows through the at least one first heat exchanger (30) in countercurrent.

3. The dehumidifier (10) as claimed in either of the preceding claims, **characterized in that** the at least one first heat exchanger (30) is designed as a plate heat exchanger.

4. The dehumidifier (10) as claimed in any of the preceding claims, **characterized in that** the housing (20) of the dehumidifier (10) has a rectangular outline.

5. The dehumidifier (10) as claimed in claim 4, **characterized in that** the housing (20) has a broadening in the region of the water storage means (50).

6. The dehumidifier (10) as claimed in any of the preceding claims, **characterized in that** the dehumidifier (10) has at least two fill level sensors in the water storage means (50).

7. A fuel cell device having at least one dehumidifier (10) as claimed in any of the preceding claims.

8. The fuel cell device as claimed in claim 7, **characterized in that** the housing (20) of the dehumidifier (10) is designed as a supporting element of the fuel cell device.

9. A submarine having at least one fuel cell device as claimed in either of claims 7 and 8.

## Revendications

1. Déshumidificateur (10), dans lequel le déshumidificateur (10) comporte un boîtier (20), dans lequel le déshumidificateur (10) comporte au moins un premier échangeur de chaleur (30) et au moins un deuxième échangeur de chaleur à l'intérieur du boîtier (20), dans lequel ledit au moins un premier échangeur de chaleur (30) est disposé sous ledit au moins un deuxième échangeur de chaleur de telle sorte qu'un flux gazeux puisse traverser successivement les deux échangeurs de chaleur, dans lequel le flux gazeux traverse ledit au moins un premier échangeur de chaleur (30) de bas en haut, le flux gazeux traversant le au moins un deuxième échangeur de chaleur de bas en haut, le au moins un premier échangeur de chaleur (30) étant conçu pour refroidir le flux gazeux, le au moins un deuxième échangeur de chaleur étant conçu pour chauffer le flux gazeux, un moyen de stockage d'eau (50) étant disposé sous le au moins un premier échangeur de chaleur (30) dans le boîtier (20).

2. Le déshumidificateur (10) selon la revendication 1, **caractérisé en ce que** le fluide de refroidissement s'écoule à contre-courant à travers le au moins un premier échangeur de chaleur (30).

3. Le déshumidificateur (10) selon l'une quelconque des revendications précédentes, **caractérisé en ce que** ledit au moins un premier échangeur de chaleur (30) est conçu comme un échangeur de chaleur à plaques.

4. Le déshumidificateur (10) selon l'une quelconque des revendications précédentes, **caractérisé en ce que** le boîtier (20) du déshumidificateur (10) présente un contour rectangulaire.

5. Le déshumidificateur (10) selon la revendication 4, **caractérisé en ce que** le boîtier (20) présente un élargissement dans la zone du moyen de stockage d'eau (50).

6. Le déshumidificateur (10) selon l'une quelconque des revendications précédentes, **caractérisé en ce que** le déshumidificateur (10) comporte au moins deux capteurs de niveau de remplissage dans le moyen de stockage d'eau (50).

7. Dispositif de pile à combustible comportant au moins un déshumidificateur (10) selon l'une quelconque des revendications précédentes.

8. Dispositif à pile à combustible selon la revendication 7, **caractérisé en ce que** le boîtier (20) du déshumidificateur (10) est conçu comme un élément de support du dispositif à pile à combustible.

9. Sous-marin comportant au moins un dispositif à pile à combustible tel que défini dans l'une ou l'autre des revendications 7 et 8.
